# EUROPEAN PATENT APPLICATION

(11) **EP 3 836 652 A1**
(43) Date of publication of application: **16.06.2021**
(21) Application number: 19848733.2
(22) Date of filing: 19.07.2019
(51) Int. Cl.: H04W 56/00

(54) **METHOD FOR INDICATING AND ACQUIRING POSITION OF SYNCHRONIZATION SIGNAL BLOCK, BASE STATION, TERMINAL AND MEDIUM**

(30) Priority: 08.08.2018 CN 201810897194
(71) Applicant: Beijing Unisoc Communications Technology Co., Ltd., Beijing 100083 (CN)
(72) Inventor: ZHOU, Huan, Shanghai 201203 (CN); ZHOU, Huayu, Shanghai 201203 (CN)
(74) Representative: Stöckeler, Ferdinand
(86) International application number: PCT/CN2019/096780
(87) International publication number: WO 2020/029772

(57) **Abstract**

A method for indicating and acquiring the position of a synchronization signal block, a base station, a terminal and a medium. The indication method comprises: acquiring position offset information between an actual sending position and a theoretical sending position of a synchronization signal block; and sending the synchronization signal block to a user terminal at the actual sending position, wherein the synchronization signal block carries the position offset information, so that the user terminal determines, according to the position offset information and the actual sending position, the theoretical sending position for synchronization. By means of the solution, a user terminal can prevent cell synchronization being influenced by the difference between an actual sending position and a theoretical sending position of a synchronization signal block.

## Description

### CROSS-REFERENCE TO RELATED APPLICATIONS

This application claims the benefit of priority to Chinese Patent Application No. 201810897194.8, filed on August 8, 2018, and entitled "METHOD FOR INDICATING POSITION OF SYNCHRONIZATION SIGNAL BLOCK, METHOD FOR ACQUIRING POSITION OF SYNCHRONIZATION SIGNAL BLOCK, BASE STATION, TERMINAL AND MEDIUM", the entire disclosure of which is incorporated herein by reference.

### TECHNICAL FIELD

The present disclosure generally relates to radio communication field, and more particularly, to a method for indicating a position of a synchronization signal block, a method for acquiring a position of a synchronization signal block, a base station, a terminal and a medium.

### BACKGROUND

The 3rd Generation Partnership Project (3GPP) standards organization will study how to deploy a New Radio (NR) network on an unlicensed spectrum, so as to achieve fair and effective usage of the unlicensed spectrum and increase a data transmission rate of NR systems. There are three main ways for the NR network to use the unlicensed spectrum. The first one includes a NR cell of an unlicensed spectrum serving as a primary cell, the second one includes a UE accessing a NR cell of an unlicensed spectrum through a Long Term Evolution (LTE) cell, and the third one includes a UE accessing a NR cell of an unlicensed spectrum through a NR cell. In the second and third ways, the UE and an evolved Node B (eNB) may simultaneously operate on the licensed spectrum and the unlicensed spectrum, which is also called New RAT unlicense (NR-U) technology.

Licensed Assisted Accessing (LAA) may adopt a Listen-Before-Talk (LBT) process to realize the coexistence of LAA and other systems of different operators in the unlicensed spectrum. During the LBT process, for the unlicensed spectrum, Clear Channel Assessment (CCA) is required to determine whether a current channel is available before data transmission.

In existing techniques, the base station uses a fixed time window to transmit a synchronization signal, and there may be a situation that a transmission opportunity is lost due to a failure of the LBT. When the transmission opportunity is lost, the base station may wait for a transmission time of a next synchronization signal to transmit the synchronization signal, which requires a relatively long waiting time. To reduce the waiting time, the base station may perform multiple CCA detections, and after any successful CCA detection, the synchronization signal can be transmitted. However, the above solution may cause an actual transmission position of the synchronization signal to be inconsistent with a theoretical transmission position of the synchronization signal, thereby affecting cell synchronization performed by the UE.

### SUMMARY

Embodiments of the present disclosure may avoid affecting cell synchronization of a UE caused by inconsistency between an actual transmission position and a theoretical transmission position of a synchronization signal block.

In an embodiment of the present disclosure, a method for indicating a position of a synchronization signal block is provided, including: acquiring position offset information between an actual transmission position and a theoretical transmission position of the synchronization signal block; and transmitting the synchronization signal block to a UE at the actual transmission position, wherein the synchronization signal block carries the position offset information, so that the UE determines the theoretical transmission position for synchronization based on the position offset information and the actual transmission position.

Optionally, the position offset information is indicated by an initial sequence of Physical Broadcast Channel (PBCH) Demodulation Reference Signal (DMRS) in the synchronization signal block.

Optionally, the position offset information includes the number of synchronization signal blocks by which the theoretical transmission position is offset from the actual transmission position.

Optionally, the position offset information includes the number of time slots by which the theoretical transmission position is offset from the actual transmission position.

In an embodiment of the present disclosure, a method for acquiring a position of a synchronization signal block is provided, including: receiving a synchronization signal block from a base station; acquiring, from the synchronization signal block, position offset information between a theoretical transmission position and an actual transmission position of the synchronization signal block; and determining the theoretical transmission position of the synchronization signal block and performing synchronization based on the position offset information and the actual transmission position.

Optionally, acquiring, from the synchronization signal block, position offset information between a theoretical transmission position and an actual transmission position of the synchronization signal block includes: acquiring the position offset information from an initial sequence of PBCH DMRS in the synchronization signal block.

Optionally, the position offset information includes the number of synchronization signal blocks by which the theoretical transmission position is offset from the actual transmission position.

Optionally, the position offset information includes the number of time slots by which the theoretical transmission position is offset from the actual transmission position.

In an embodiment of the present disclosure, a base station is provided, including: a first acquisition circuitry configured to acquire position offset information between an actual transmission position and a theoretical transmission position of the synchronization signal block; and a transmission circuitry configured to transmit the synchronization signal block to a UE at the actual transmission position, wherein the synchronization signal block carries the position offset information, so that the UE determines the theoretical transmission position for synchronization based on the position offset information and the actual transmission position.

Optionally, the position offset information is indicated by an initial sequence of PBCH DMRS in the synchronization signal block.

Optionally, the position offset information includes the number of synchronization signal blocks by which the theoretical transmission position is offset from the actual transmission position.

Optionally, the position offset information includes the number of time slots by which the theoretical transmission position is offset from the actual transmission position.

In an embodiment of the present disclosure, a UE is provided, including: a reception circuitry configured to receive a synchronization signal block from a base station; a second acquisition circuitry configured to acquire, from the synchronization signal block, position offset information between a theoretical transmission position and an actual transmission position of the synchronization signal block; and a determination circuitry configured to determine the theoretical transmission position of the synchronization signal block and perform synchronization based on the position offset information and the actual transmission position.

Optionally, the second acquisition circuitry is configured to acquire the position offset information from an initial sequence of PBCH DMRS in the synchronization signal block.

Optionally, the position offset information includes the number of synchronization signal blocks by which the theoretical transmission position is offset from the actual transmission position.

Optionally, the position offset information includes the number of time slots by which the theoretical transmission position is offset from the actual transmission position.

In an embodiment of the present disclosure, a computer readable storage medium having computer instructions stored therein is provided, wherein when the computer instructions are executed, any one of the above methods for indicating a position of a synchronization signal block is performed.

In an embodiment of the present disclosure, a computer readable storage medium having computer instructions stored therein is provided, wherein when the computer instructions are executed, any one of the above methods for acquiring a position of a synchronization signal block is performed.

In an embodiment of the present disclosure, a base station including a memory and a processor is provided, wherein the memory has computer instructions stored therein, and when the processor executes the computer instructions, any one of the above methods for indicating a position of a synchronization signal block is performed.

In an embodiment of the present disclosure, a UE including a memory and a processor is provided, wherein the memory has computer instructions stored therein, and when the processor executes the computer instructions, any one of the above methods for acquiring a position of a synchronization signal block is performed.

Embodiments of the present disclosure may provide following advantages.

In embodiments of the present disclosure, when it is determined that the actual transmission position of the synchronization signal block is different from the theoretical transmission position of the synchronization signal block, the position offset information is indicated to the UE in the synchronization signal block transmitted to the UE. The UE may determine the theoretical transmission position of the synchronization signal block based on the position offset information and the actual transmission position of the synchronization signal block, and perform a corresponding synchronization operation. By indicating the position offset information to the UE in the synchronization signal block, the UE can learn the theoretical transmission position of the synchronization signal block, so as to avoid influence caused by inconsistency between the actual transmission position and the theoretical transmission position of the synchronization signal block.

### BRIEF DESCRIPTION OF THE DRAWINGS

Figure 1 is a flow chart of a method for indicating a position of a synchronization signal block according to an embodiment;
Figure 2 is a diagram of a position offset of a synchronization signal block according to an embodiment;
Figure 3 is a diagram of a position offset of a synchronization signal block according to an embodiment;
Figure 4 is a flow chart of a method for acquiring a position of a synchronization signal block according to an embodiment;
Figure 5 is a structural diagram of a base station according to an embodiment; and
Figure 6 is a structural diagram of a UE according to an embodiment.

### DETAILED DESCRIPTION

In the existing techniques, the base station uses a fixed time window to transmit a synchronization signal, and there may be a situation that a transmission opportunity is lost due to a failure of the LBT. When the transmission opportunity is lost, the base station may wait for a transmission time of a next synchronization signal to transmit the synchronization signal, which requires a relatively long waiting time. To reduce the waiting time, the base station may perform multiple CCA detections, and after any successful CCA detection, the synchronization signal can be transmitted. However, the above solution may cause an actual transmission position of the synchronization signal to be inconsistent with a theoretical transmission position of the synchronization signal, thereby affecting cell synchronization performed by the UE.

In embodiments of the present disclosure, by indicating the position offset information to the UE in the synchronization signal block, the UE can learn the theoretical transmission position of the synchronization signal block, so as to avoid influence caused by inconsistency between the actual transmission position and the theoretical transmission position of the synchronization signal block.

In order to clarify the objects, characteristics and advantages of the disclosure, embodiments of present disclosure will be described in detail in conjunction with accompanying drawings.

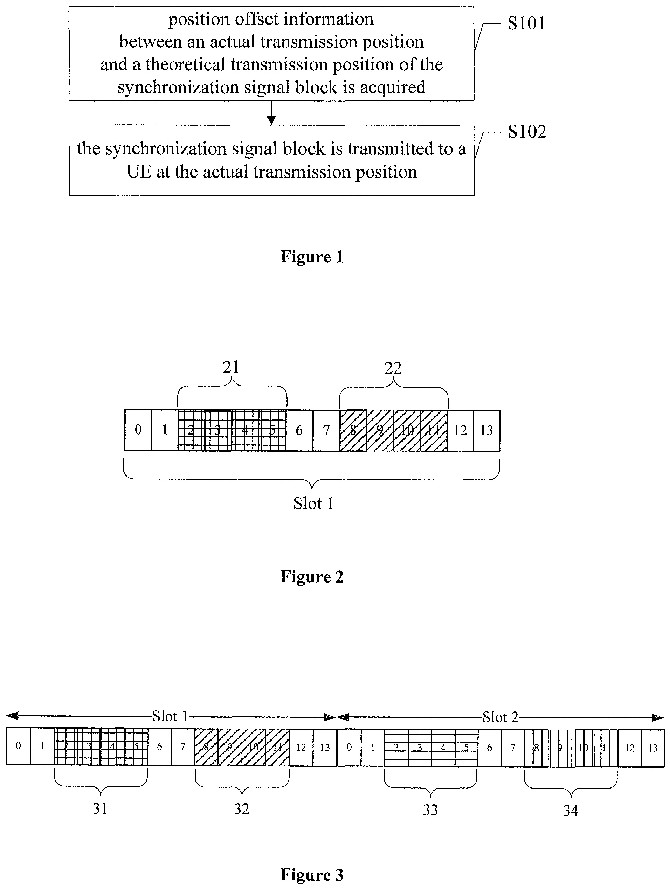

Figure 1 is a flow chart of a method for indicating a position of a synchronization signal block according to an embodiment. Referring to Figure 1, the method may include S101 and S102.

In S101, position offset information between an actual transmission position and a theoretical transmission position of the synchronization signal block is acquired.

In some embodiments, a base station may perform a CCA detection. When passing the CCA detection, it is determined that a current channel is available, and afterward the base station may issue a synchronization signal block to a UE, where the synchronization signal block may carry a synchronization signal.

In practical applications, when a certain condition is met, the base station may issue a synchronization signal block carrying a synchronization signal to the UE. For example, the base station is set with a synchronization signal transmission period, and transmits synchronization signal blocks to the UE at the timing of the synchronization signal transmission period. Detailed principles and processes of the base station transmitting the synchronization signal block to the UE may be referred to existing solutions, and are not described here.

In the embodiments of the present disclosure, when the base station transmits the synchronization signal block to the UE at the timing of the synchronization signal transmission period, a position of the synchronization signal block is the theoretical transmission position of the synchronization signal block. When it fails the CCA detection, although it is in the synchronization signal transmission period, the base station may not be able to complete the transmission of the synchronization signal block. Therefore, the base station may transmit the synchronization signal block in other positions. In this case, the position where the base station transmits the synchronization signal block is referred to as the actual transmission position of the synchronization signal block.

In other words, the actual transmission position of the synchronization signal block may be different from the theoretical transmission position of the synchronization signal block.

In some embodiments, before transmitting the synchronization signal block to the UE, the base station may first obtain the actual transmission position of the synchronization signal block and the theoretical transmission position of the synchronization signal block, and obtain the position offset information between the actual transmission position and the theoretical transmission position.

In some embodiments, the position offset information between the actual transmission position and the theoretical transmission position includes the number of synchronization signal blocks by which the theoretical transmission position is offset from the actual transmission position.

Figure 2 is a diagram of a position offset of a synchronization signal block according to an embodiment. Referring to Figure 2, a theoretical transmission position of a first synchronization signal block is position 21, a theoretical transmission position of a second synchronization signal block is position 22, and the positions 21 and 22 are within a time slot 1. Position 21 includes symbols 2, 3, 4 and 5, and position 22 includes symbols 8, 9, 10 and 11.

As the current channel is not available, the first synchronization signal block fails to be transmitted at position 21, and thus, the first synchronization signal block can be transmitted at position 22. In other words, the first synchronization signal block occupies the theoretical transmission position of the second synchronization signal block, therefore, an actual transmission position of the second synchronization signal block may be extended to a theoretical transmission position of a third synchronization signal block in a next time slot, and so on.

For an application scenario in Figure 2, the position offset information includes the number of synchronization signal blocks by which the theoretical transmission position is offset from the actual transmission position being 1.

In some embodiments, the position offset information between the actual transmission position and the theoretical transmission position includes the number of time slots by which the theoretical transmission position is offset from the actual transmission position.

Figure 3 is a diagram of a position offset of a synchronization signal block according to an embodiment. Referring to Figure 3, a theoretical transmission position of a first synchronization signal block is position 31, and a theoretical transmission position of a second synchronization signal block is position 32. As the first and second synchronization signal blocks fail to be transmitted in a time slot 1, the first synchronization signal block can be transmitted at position 33 in a time slot 2, and the second synchronization signal block can be transmitted at position 34 in the time slot 2. The position 33 is a theoretical transmission position of a third synchronization signal block, and the position 34 is a theoretical transmission position of a fourth synchronization signal block.

Accordingly, as the first synchronization signal block occupies the theoretical transmission position of the third synchronization signal block, and the second synchronization signal block occupies the theoretical transmission position of the fourth synchronization signal block, an actual transmission position of the third synchronization signal block may be extended to a following time slot, and an actual transmission position of the fourth synchronization signal block may be extended to the following time slot as well.

For an application scenario in Figure 3, the position offset information includes the number of time slots by which the theoretical transmission position is offset from the actual transmission position being 1.

In S102, the synchronization signal block is transmitted to a UE at the actual transmission position.

In some embodiments, the base station may transmit the synchronization signal block to the UE at the actual transmission position. The synchronization signal block carries the position offset information, so that the UE can acquire the position offset information after receiving the synchronization signal block from the base station, and determine the theoretical transmission position of the synchronization signal block and perform a corresponding cell synchronization operation based on the position offset information and the actual transmission position of the synchronization signal block.

In some embodiments, the base station may indicate the position offset information to the UE by an initial sequence of PBCH DMRS.

In some embodiments, before transmitting the synchronization signal block to the UE, for each synchronization signal block, the base station may obtain the position offset information between the actual transmission position and the theoretical transmission position of the synchronization signal block, and indicate the corresponding position offset information to the UE by the initial sequence of PBCH DMRS in the synchronization signal block.

It should be noted that when the actual transmission position of the synchronization signal block is the same as the theoretical sending position of the synchronization signal block, the corresponding position offset information is 0. generally, when the actual transmission position of the synchronization signal block is different from the theoretical transmission position of the synchronization signal block, a time of the actual transmission position is later than a time of the theoretical transmission position. Therefore, after acquiring the position offset information, the UE may move the actual transmission position forward by an offset corresponding to the position offset information when calculating the theoretical transmission position based on the actual transmission position.

For example, in a first synchronization signal block, the offset corresponding to the position offset information carried is one synchronization signal block. The UE can learn that the theoretical transmission position of the first synchronization signal block is a position of a synchronization signal block before the actual transmission position.

From above, in the above embodiments, by indicating the position offset information to the UE in the synchronization signal block, the UE can learn the theoretical transmission position of the synchronization signal block, so as to avoid influence caused by inconsistency between the actual transmission position and the theoretical transmission position of the synchronization signal block.

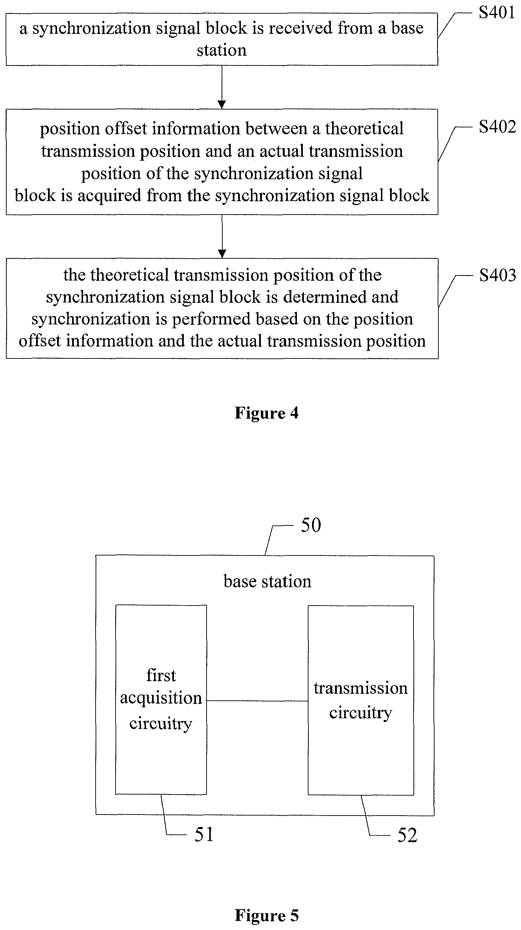

Figure 4 is a flow chart of a method for acquiring a position of a synchronization signal block according to an embodiment. Referring to Figure 4, the method may include S401, S402 and S403.

In S401, a synchronization signal block is received from a base station.

In some embodiments, the base station may issue the synchronization signal block to the UE, so that the UE performs a corresponding cell synchronization operation according to the received synchronization signal block.

In some embodiments, the base station may select a position where the synchronization signal block is transmitted when transmitting the synchronization signal block to the UE, and the selected position may be referred to as the actual transmission position of the synchronization signal block. The synchronization signal block issued by the base station carries position offset information between the actual transmission position and the theoretical transmission position of the synchronization signal block.

In some embodiments, the base station may indicate the position offset information to the UE by an initial sequence of PBCH DMRS.

In S402, position offset information between a theoretical transmission position and an actual transmission position of the synchronization signal block is acquired from the synchronization signal block.

In some embodiments, after receiving the synchronization signal block from the base station, the UE can acquire the position offset information therefrom.

In some embodiments, the UE may analyze the received synchronization signal block, and acquire the position offset information from the initial sequence of PBCH DMRS in the analyzed synchronization signal block.

In S403, the theoretical transmission position of the synchronization signal block is determined and synchronization is performed based on the position offset information and the actual transmission position.

In some embodiments, the UE may determine the theoretical transmission position of the synchronization signal block and perform a corresponding cell synchronization operation based on the position offset information and the actual transmission position of the synchronization signal block.

For example, the position offset information acquired by the UE is an offset of one synchronization signal block. Therefore, the UE can learn that the theoretical transmission position of the synchronization signal block is a position of a synchronization signal block before the actual transmission position.

In some embodiments, detailed processes and principles of S401 to S403 can be referred to those of S101 and S102, and are not described here.

Figure 5 is a structural diagram of a base station 50 according to an embodiment. Referring to Figure 5, the base station 50 may include a first acquisition circuitry 51 and a transmission circuitry 52.

The first acquisition circuitry 51 is configured to acquire position offset information between an actual transmission position and a theoretical transmission position of the synchronization signal block.

The transmission circuitry 52 is configured to transmit the synchronization signal block to a UE at the actual transmission position, wherein the synchronization signal block carries the position offset information, so that the UE determines the theoretical transmission position for synchronization based on the position offset information and the actual transmission position.

In some embodiments, the position offset information is indicated by an initial sequence of PBCH DMRS in the synchronization signal block.

In some embodiments, the position offset information includes the number of synchronization signal blocks by which the theoretical transmission position is offset from the actual transmission position.

In some embodiments, the position offset information includes the number of time slots by which the theoretical transmission position is offset from the actual transmission position.

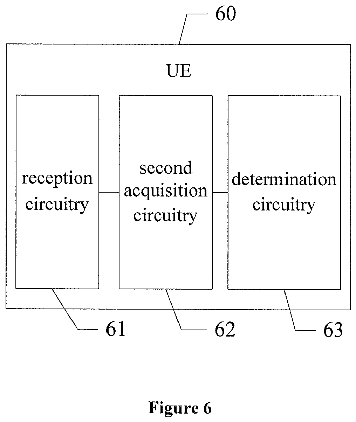

Figure 6 is a structural diagram of a UE 60 according to an embodiment. Referring to Figure 6, the UE 60 may include a reception circuitry 61, a second acquisition circuitry 61 and a determination circuitry 52.

The reception circuitry 61 is configured to receive a synchronization signal block from a base station.

The second acquisition circuitry 62 is configured to acquire, from the synchronization signal block, position offset information between a theoretical transmission position and an actual transmission position of the synchronization signal block.

The determination circuitry 63 is configured to determine the theoretical transmission position of the synchronization signal block and perform synchronization based on the position offset information and the actual transmission position.

In some embodiments, the second acquisition circuitry 62 is configured to acquire the position offset information from an initial sequence of PBCH DMRS in the synchronization signal block.

In some embodiments, the position offset information includes the number of synchronization signal blocks by which the theoretical transmission position is offset from the actual transmission position.

In some embodiments, the position offset information includes the number of time slots by which the theoretical transmission position is offset from the actual transmission position.

In an embodiment of the present disclosure, a computer readable storage medium having computer instructions stored therein is provided, wherein when the computer instructions are executed, any one of the above methods for indicating a position of a synchronization signal block is performed.

In an embodiment of the present disclosure, a computer readable storage medium having computer instructions stored therein is provided, wherein when the computer instructions are executed, any one of the above methods for acquiring a position of a synchronization signal block is performed.

In an embodiment of the present disclosure, a base station including a memory and a processor is provided, wherein the memory has computer instructions stored therein, and when the processor executes the computer instructions, any one of the above methods for indicating a position of a synchronization signal block is performed.

In an embodiment of the present disclosure, a UE including a memory and a processor is provided, wherein the memory has computer instructions stored therein, and when the processor executes the computer instructions, any one of the above methods for acquiring a position of a synchronization signal block is performed.

Those skilled in the art could understand that all or parts of the steps in the various methods of the above-mentioned embodiments may be completed by a program instructing relevant hardware, and the program may be stored in any computer-readable storage medium. The storage medium may include a Read Only Memory (ROM), a Random Access Memory (RAM), a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for indicating a position of a synchronization signal block, comprising:
acquiring position offset information between an actual transmission position and a theoretical transmission position of the synchronization signal block; and
transmitting the synchronization signal block to a User Equipment (UE) at the actual transmission position, wherein the synchronization signal block carries the position offset information, so that the UE determines the theoretical transmission position for synchronization based on the position offset information and the actual transmission position.

2. The method according to claim 1, wherein the position offset information is indicated by an initial sequence of Physical Broadcast Channel (PBCH) Demodulation Reference Signal (DMRS) in the synchronization signal block.

3. The method according to claim 1, wherein the position offset information comprises the number of synchronization signal blocks by which the theoretical transmission position is offset from the actual transmission position.

4. The method according to claim 1, wherein the position offset information comprises the number of time slots by which the theoretical transmission position is offset from the actual transmission position.

5. A method for acquiring a position of a synchronization signal block, comprising:
receiving a synchronization signal block from a base station;
acquiring, from the synchronization signal block, position offset information between a theoretical transmission position and an actual transmission position of the synchronization signal block; and
determining the theoretical transmission position of the synchronization signal block and performing synchronization based on the position offset information and the actual transmission position.

6. The method according to claim 5, wherein acquiring, from the synchronization signal block, position offset information between a theoretical transmission position and an actual transmission position of the synchronization signal block comprises:
acquiring the position offset information from an initial sequence of Physical Broadcast Channel (PBCH) Demodulation Reference Signal (DMRS) in the synchronization signal block.

7. The method according to claim 5, wherein the position offset information comprises the number of synchronization signal blocks by which the theoretical transmission position is offset from the actual transmission position.

8. The method according to claim 5, wherein the position offset information comprises the number of time slots by which the theoretical transmission position is offset from the actual transmission position.

9. A base station, comprising:
a first acquisition circuitry configured to acquire position offset information between an actual transmission position and a theoretical transmission position of the synchronization signal block; and
a transmission circuitry configured to transmit the synchronization signal block to a User Equipment (UE) at the actual transmission position, wherein the synchronization signal block carries the position offset information, so that the UE determines the theoretical transmission position for synchronization based on the position offset information and the actual transmission position.

10. The base station according to claim 9, wherein the position offset information is indicated by an initial sequence of Physical Broadcast Channel (PBCH) Demodulation Reference Signal (DMRS) in the synchronization signal block.

11. The base station according to claim 9, wherein the position offset information comprises the number of synchronization signal blocks by which the theoretical transmission position is offset from the actual transmission position.

12. The base station according to claim 9, wherein the position offset information comprises the number of time slots by which the theoretical transmission position is offset from the actual transmission position.

13. A User Equipment (UE), comprising:
a reception circuitry configured to receive a synchronization signal block from a base station;
a second acquisition circuitry configured to acquire, from the synchronization signal block, position offset information between a theoretical transmission position and an actual transmission position of the synchronization signal block; and
a determination circuitry configured to determine the theoretical transmission position of the synchronization signal block and perform synchronization based on the position offset information and the actual transmission position.

14. The UE according to claim 13, wherein the second acquisition circuitry is configured to acquire the position offset information from an initial sequence of Physical Broadcast Channel (PBCH) Demodulation Reference Signal (DMRS) in the synchronization signal block.

15. The UE according to claim 13, wherein the position offset information comprises the number of synchronization signal blocks by which the theoretical transmission position is offset from the actual transmission position.

16. The UE according to claim 13, wherein the position offset information comprises the number of time slots by which the theoretical transmission position is offset from the actual transmission position.

17. A computer readable storage medium having computer instructions stored therein, wherein when the computer instructions are executed, the method of any one of claims 1 to 4 or the method of any one of claims 5 to 8 is performed.

18. A base station comprising a memory and a processor, wherein the memory has computer instructions stored therein, and when the processor executes the computer instructions, the method of any one of claims 1 to 4 is performed.

19. A User Equipment (UE) comprising a memory and a processor, wherein the memory has computer instructions stored therein, and when the processor executes the computer instructions, the method of any one of claims 5 to 8 is performed.
